# EUROPEAN PATENT APPLICATION

(11) **EP 1 154 610 A2**
(43) Date of publication of application: **14.11.2001**
(21) Application number: 01480023.9
(22) Date of filing: 15.03.2001
(51) Int. Cl.: H04L 29/06

(54) **Methods and system for defeating TCP Syn flooding attacks**

(30) Priority: 12.05.2000 EP 00480038
(71) Applicant: INTERNATIONAL BUSINESS MACHINES CORPORATION, Armonk, NY 10504 (US)
(72) Inventor: Lamberton, Marc, 06600 Antibes (FR); Thubert, Pascal, 06140 Vence (FR); Levy-Abegnoli, Eric, 06200 Nice (FR)
(74) Representative: Etorre, Yves Nicolas

(57) **Abstract**

Methods and a system for defeating TCP SYN flooding attacks are disclosed. In a server running TCP the invention assumes that, whenever receiving a SYN message, the server computes an ISR (Initial Sequence number Receiver side) and includes it in its SYN-ACK response to the client. Then, the server, also listening for the receiving of ACK messages from clients, checks the ISR. If checking fails, ACK message is dropped. If passing checking, ISR is accepted as an authentic computed ISR and decoded accordingly. Only then, resources are allocated and a TCP connection is actually established. After- which, listening state is returned to in order to keep processing all received TCP messages.

Invention manages to allocate server resources to establish a TCP connection only when a client indeed completes the regular TCP 3-way handshaking procedure thus, preventing half-open connections created e.g., by DoS and DDoS attacks, from hogging server resources.

## Description

### Field of the Invention

The present invention relates to the Internet and more particularly applies to Web sites potentially subject to become the victim of the denial-of-service (DoS) attack commonly referred to as SYN flooding.

### Background of the Invention

Any system connected to the Internet and providing network services based on TCP, the standard connection-oriented transport protocol of the TCP/IP suite of protocols, for example a Web server, a FTP (file transport protocol) server, or an E-mail (electronic mail) server is potentially subject to the DoS (denial of service) type of attack which consists in creating "half-open" TCP connections. A DoS attack essentially involves flooding a server with a barrage of forged requests for connection. Because, these messages have invalid return addresses, the connections can never be established. The resulting volume of unresolved open connections eventually overwhelms the server and can cause it to deny service to valid requests. While this scheme does not represent a networking security compromise in itself, it can paralyze on-line services. This is especially damaging for the new commercial Web sites selling goods and delivering services and generally all sites used to conduct business over the Internet. Thus, DoS mechanism exploits the connection-oriented TCP protocol, used to carry out the vast majority of Internet applications, and since the attack is a misuse of the TCP standard, this vulnerability exists to some degree in all implementations. Indeed, many TCP implementations are only able to handle a relatively small number of outstanding connections per port. Therefore, these ports become effectively unavailable. Although there is a time-out associated with a pending connection (so the half-open connections eventually expire and the victim server system may recover) the attacking system simply keep sending IP-spoofed packets, requesting new connections, faster than the victim system can expire the pending connections thus, flooding it. In most cases, the victim of such an attack has difficulty in accepting any new incoming network connection. In these cases, the attack does not affect existing incoming connections nor the ability to originate outgoing network connections however, often, the system may exhaust memory and other resources, crash, or be rendered otherwise inoperative. Although there is no general solution to what first appear to be normal network traffic, until it is too late, Web site administrators have taken steps to lessen the impact of DoS attacks. For example, they often use packet filtering in their front-end IP routers to provide basic access control in an attempt to contain the problem. Unfortunately, this has often the effect of slowing down router performances to an unacceptable point thus, only displacing the problem. Also, putting in place restrictions to prevent access to systems is a concept that is somehow incompatible with today's commercial site objectives which, obviously, want to encourage access to their sites.

To make things worse hackers have recently devised an even more threatening type of DoS called DDoS which stands for distributed denial of service. Because the larger Web sites were in practice able to cope reasonably well with attacks launched from a single or a limited number of machines the massive attack that can be conducted with a DDoS is presently however, unsustainable. Thus, DDoS problem is an acute threat to both the Internet in general and for Internet connected enterprises worldwide. Recently, popular commercial Internet sites, of the kind discussed here above, such as Yahoo (http://www.yahoo.com) and Amazon (a virtual bookstore at http://www.amazon.com) have been the victim of DDoS, preventing regular customers to access their sites for an extensive period of time, generating massive media attention on this form of attack. Tools, which amplify normal DoS through unsuspecting third parties, have been evolving recently. Several remotely and automatically controlled attack tools have been created and improved through a broad cooperation between hackers. Extensively tested and analyzed, these tools have now become widely available to almost anyone with malicious intent. Hence, they allow a single attacker to gain control of thousands of unsuspecting and compromised "slave" computers in order to direct a totally automated attack against any Internet-connected target. Those tools have proved to be very effective up to a point where no organization or Internet segment can currently withstand such an attack. Especially, with current tools and techniques, it is possible for an attacker to gain control of thousands of unprotected slave computers then, use them to direct a coordinated continuous attack against a specific target. The outcome of DDoS attacks is downtime for the target system so that customers and other users can no longer have access to the site until attack ends. Moreover, attack may continue for long periods of time, even for days or weeks, since no further communication or control traffic need to be exchanged between the attacker and the slave computers (they just ignore they have been infected). Stopping the attack from so many distributed sources is both slow and exceedingly costly. The targeted company or Internet segment can presently do very little to prevent or mitigate the effects of such an attack and has simply no viable access to the Internet. It is generally believed that DDoS attacks will tend to become common and continue to cause very public, significant interruption of service for large or critical Internet services with essentially no viable defense since the attack itself is fundamental to the TCP protocol used by all systems. Therefore, the target system, if not crashing, just simply ceases to provide service for the length of the attack.

### Object of the Invention

Thus, it is a broad object of the invention to overcome the shortcomings of the prior art as described here above.

It is another object of the invention to provide a method and system to defeat attacks, against Web servers and other Internet devices and applications, which are based on the creation of half-open TCP connections.

It is still another object of the invention to allow the validation of TCP connection requests which does not require, in a target device, the allocation of any resource.

Further objects, features and advantages of the present invention will become apparent to the ones skilled in the art upon examination of the following description in reference to the accompanying drawings. It is intended that any additional advantages be incorporated herein.

### Summary of the Invention

Methods and a system for defeating, in a server unit of an IP network, a SYN flooding attack are disclosed. The server unit runs TCP allowing the establishment of TCP connections with client units. The invention assumes that, upon having activated TCP in the server unit, this latter starts listening for the receiving of SYN messages from client units. Whenever receiving a SYN message the server computes an ISR (Initial Sequence number Receiver side) and responds to the client unit with a SYN-ACK message including the computed ISR. Server is also listening for the receiving of ACK messages sent from client units. Whenever receiving an ACK message it checks the ISR. If checking fails, ACK message is dropped. If passing checking, ISR is accepted as being an authentic computed ISR and decoded accordingly. Then, resources are allocated, according to the content of the the computed ISR, and a TCP connection is actually established. In all cases, listening state, from which processing of all received messages starts, is returned to.

Therefore, invention manages to allocate server resources to establish a TCP connection only when a client indeed completes the regular TCP 3-way handshaking procedure thus, preventing half-open connections created e.g., by DoS and DDoS attacks, from hogging server resources.

### Brief Description of the Drawings

- **Figure 1**: Describes prior art and defines what is an half-open TCP connection.
- **Figure 2-a**: shows the standard FSM (finite state machine) used to define behavior and how to manage TCP connections.

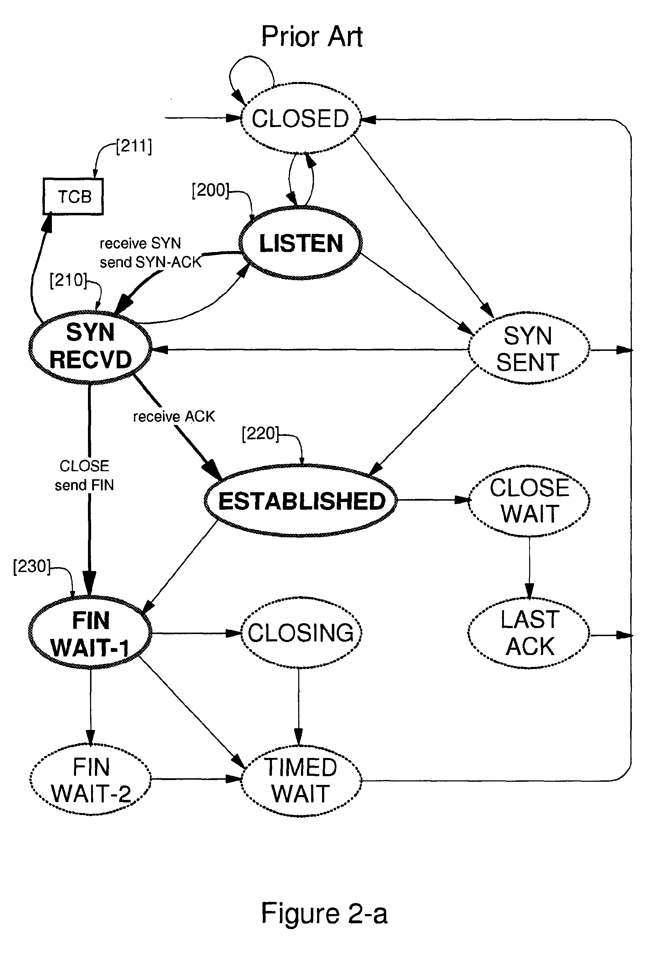

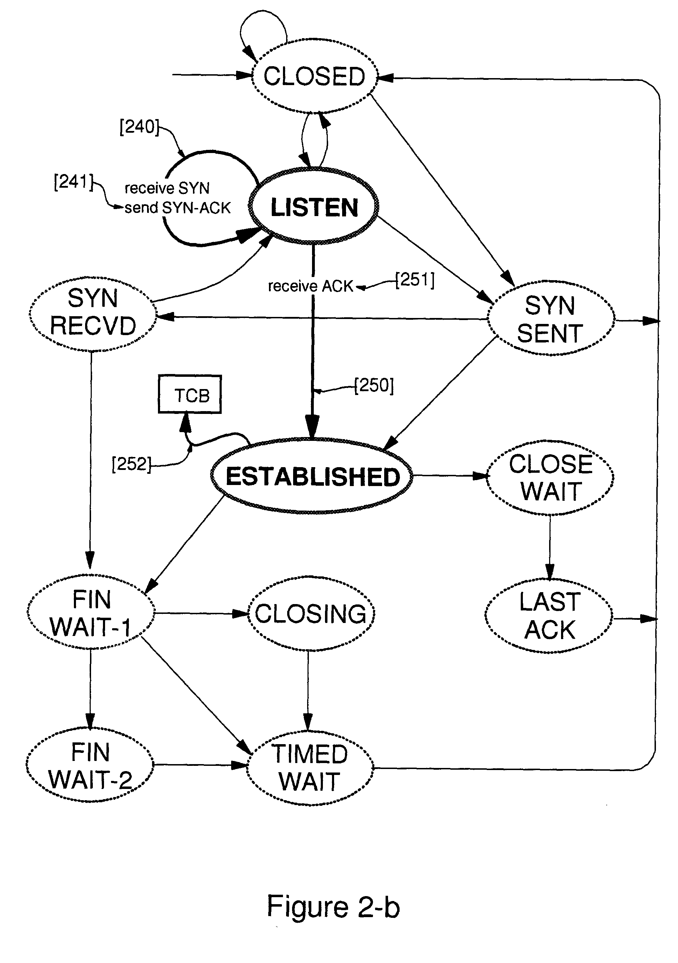

- **Figure 2-b**: shows how standard FSM is changed per the invention.

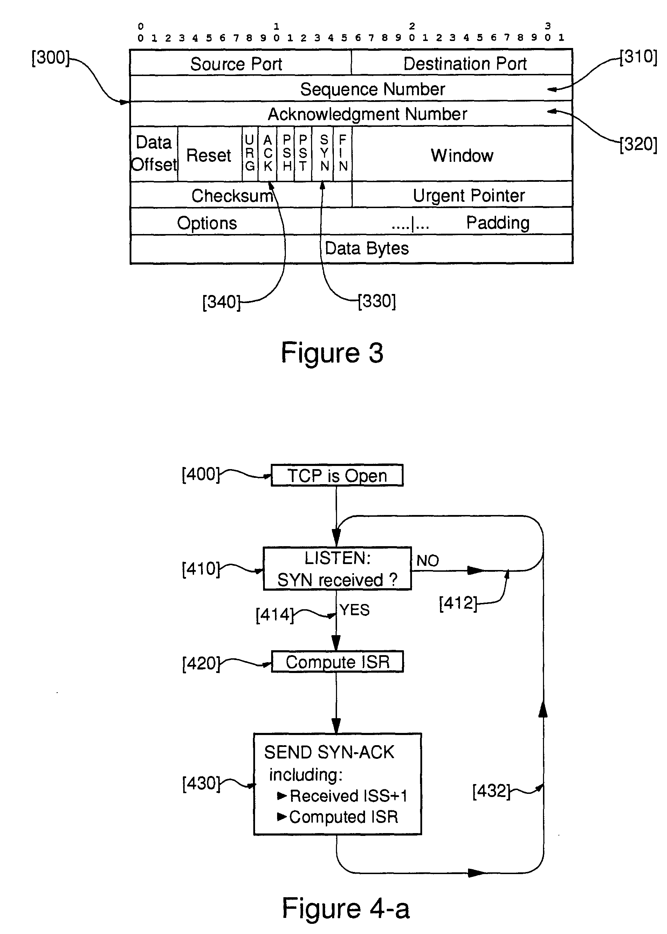

- **Figure 3**: shows the format of TCP headers.

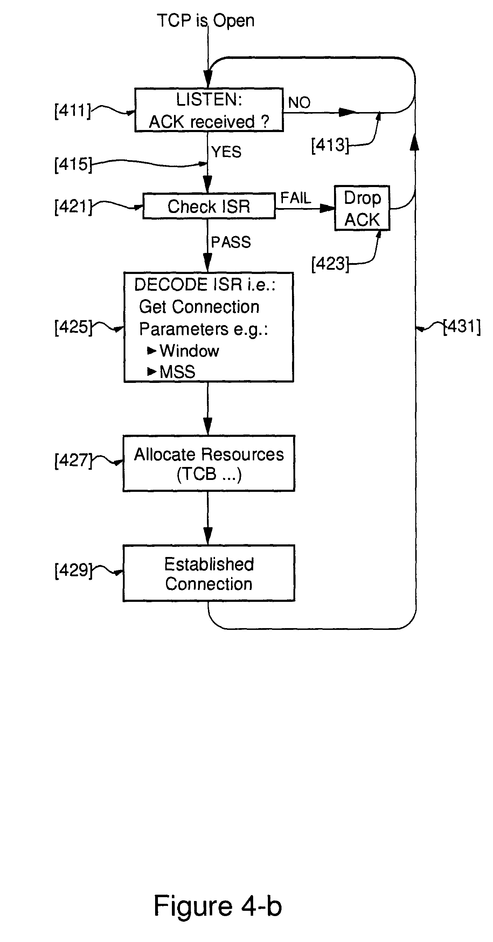

- **Figure 4-a**: is the overall state diagram to describe how SYN messages are processed in server per the invention.
- **Figure 4-b**: is the overall state diagram to describe how ACK messages are processed in server per the invention.

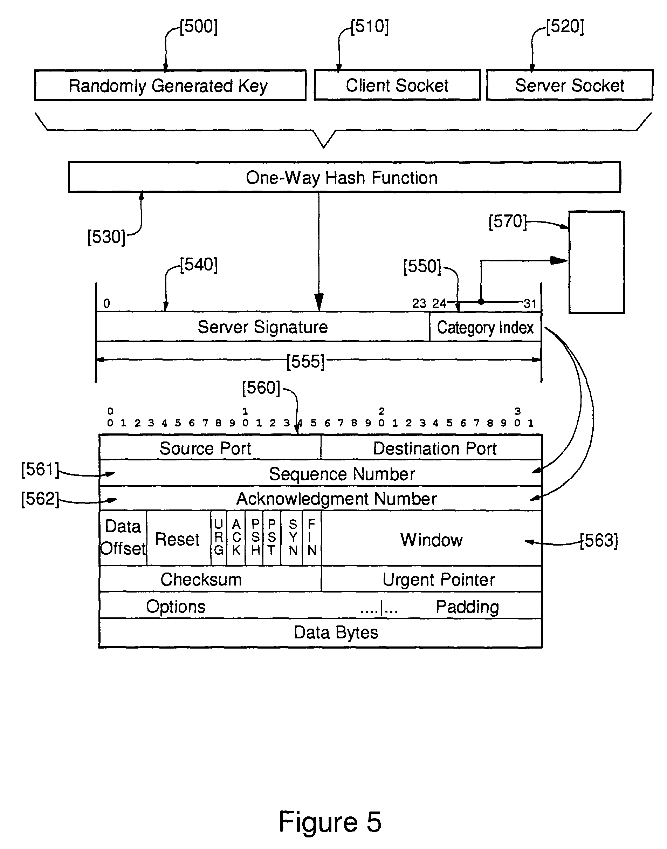

- **Figure 5**: shows the overall way of obtaining a computed ISR.

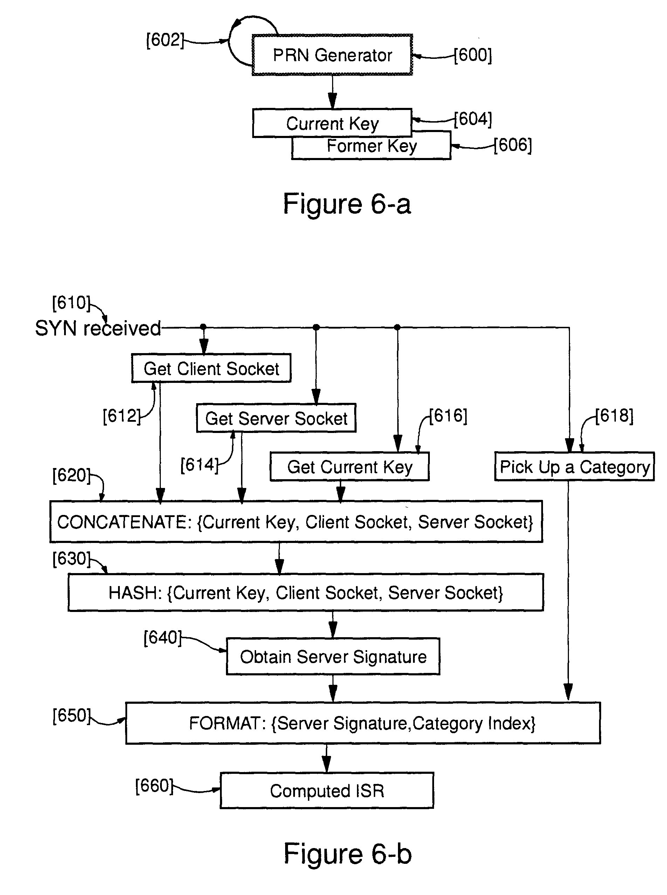

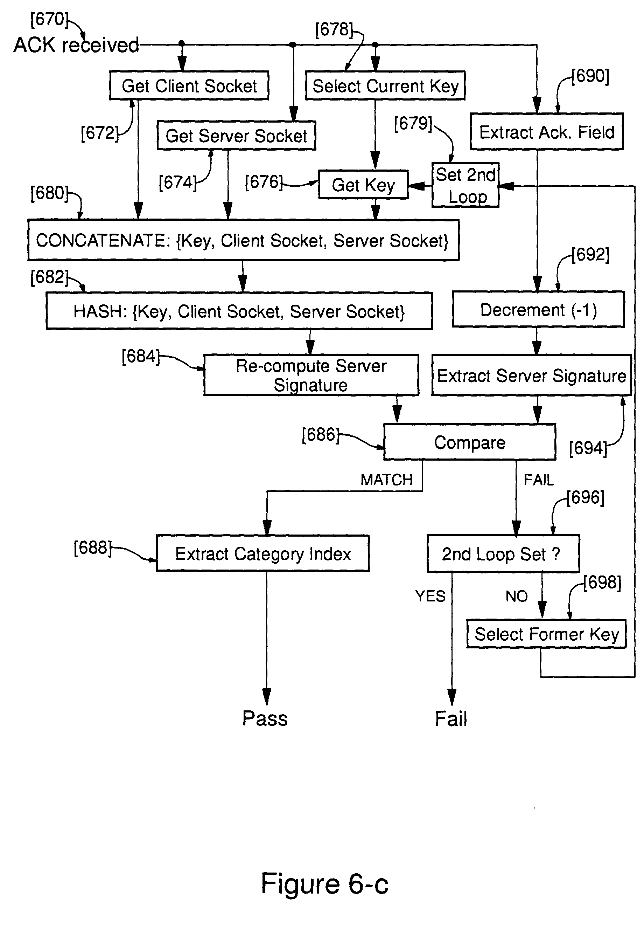

- **Figure 6-a**: depicts a PRN (pseudo-random-number) generator to implement the invention.
- **Figure 6-b**: is an exemplary detailed state diagram to compute ISR.
- **Figure 6-c**: is an exemplary detailed state diagram to check ISR.

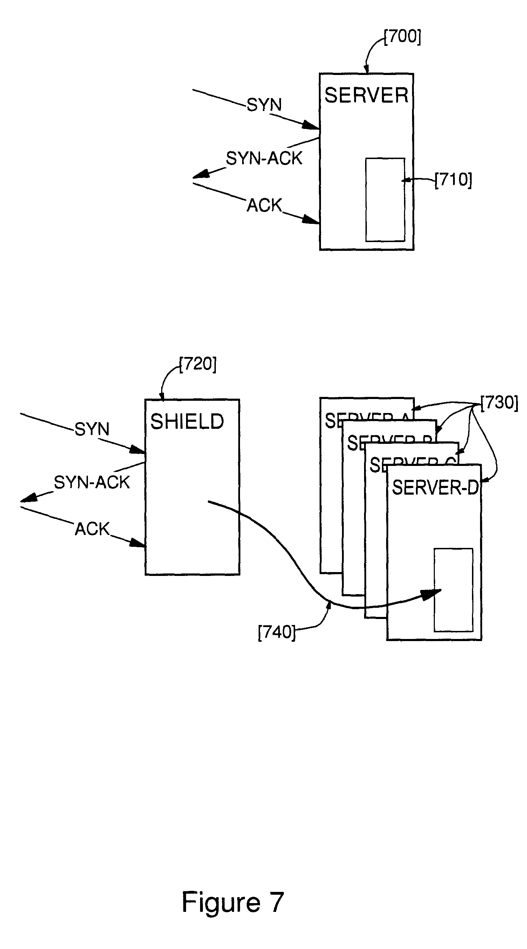

- **Figure 7**: is an exemplary system per the invention.

### Detailed Description of the Preferred Embodiment

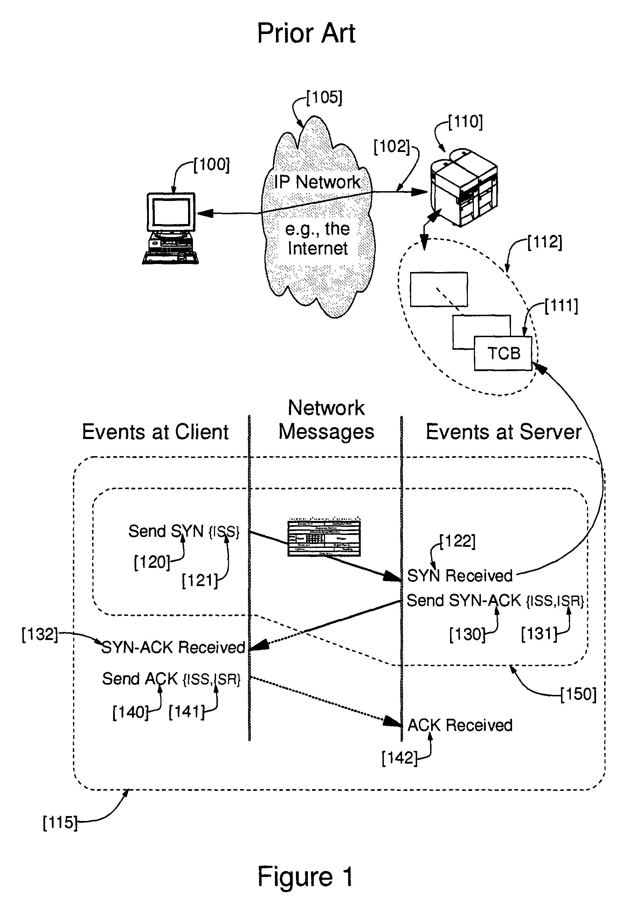

**Figure 1** illustrates prior art i.e., describes how a TCP connection is normally established hence, defining what is a half-open TCP connection created by hackers to flood e.g., a Web server. When a system, the client [100], attempts to establish a TCP connection [102] through an IP network, the Internet [105], to a system providing a service, the server [110], the client and server exchange a sequence of messages [115]. This connection technique applies to all TCP connections i.e., telnet, Web, email, etc. The client system begins by sending a SYN message [120] (i.e., a message aimed at SYNchronizing sequence numbers) to the server thus including an ISS (Initial Sequence number Sender side) [121]. Upon receiving a SYN [122], server creates a transmission control block or TCB [111], in server system memory. The server then acknowledges the SYN message by sending SYN-ACK message [130] to the client including an ISR (Initial Sequence number Receiver side) [131]. The client then finishes establishing the connection by responding, after having received the SYN-ACK [132], with an ACK message [140] including both ISS and ISR [141]. At completion of this three-way handshake the connection between the client and the server is then open, and the service-specific data can be exchanged between the client [100] and the server [110]. The potential for abuse arises at the point where the server system has sent an acknowledgment i.e., SYN-ACK [130], back to the client, but has not received the ACK message [142] yet. This is what is meant by half-open connection [150]. Because the server has built in its system memory a data structure [112], of finite size, describing all pending connections it can be made to overflow by intentionally creating too many half-open connections. The attacking system can easily create half-open connections [150] with IP spoofing. It sends SYN messages to the victim server system which appear to be legitimate but in fact reference a client system that is unable to respond to the SYN-ACK messages. This means that the final ACK message [140] is never sent to the victim server system. The half-open connections data structure [112] on the victim server system eventually fills up so that the system becomes unable to accept any new incoming connections until it is cleared. Although there is a time-out associated with a pending connection, so the half-open connections eventually expire and the victim server system may recover, the attacking system simply keep sending IP-spoofed packets requesting new connections faster than the victim system gets rid of the pending connections.

**Figure 2-a** shows the whole standard finite state machine generally used to better describe the TCP protocol aimed at establishing and closing TCP connections. For the sake of correctness all states and transitions are shown. However, because the following discussion focuses on the establishment of connections, only references to the corresponding states and transitions (drawn in bold) needed to further understand the problem and solution brought by the invention are made hereafter.

Much more on establishing and closing TCP connections can be found in numerous publications dealing with the TCP/IP suite of protocols and e.g., in 'Internetworking with TCP/IP' by Douglas E. Comer, published in 1991 by Prentice Hall, Englewood Cliffs, N.J. 07632, the USA.

Not only the state machine of figure 2 is used to describe the TCP protocol it is also an actual part, in one way or another, of any TCP implementation so as to carry out the 3-way handshaking described in figure 1. Especially, it serves to remember the first two packet exchanges so that, when the third packet is received [142], the server can correlate it with an half-open connection such as [150] thus, actually establishing a connection. As already mentioned in figure 1, in order to keep-track of the initial exchange, as soon as the server receives the SYN packet [122], a transmission control block (TCB) [111] must be created. However, more has to be done. Sometimes, depending on the type of OS (operating system) in use on the server (e.g., a UNIX-like multithreaded OS), an associated thread must be created too. In any case, an instantiation of a FSM (finite state machine) as shown in figure 2 is necessary to make sure that TCP protocol is obeyed. FSM of an active server is normally in the 'LISTEN' state [200] since it is waiting for connection requests from clients. While in this state no server resources are consumed per connection. However, whenever server receives a SYN request from a client, which matches the criteria for being served e.g., because destination address and destination port match, FSM is instantiated, the here above mentioned transmission control block (TCB) is created [211] (note that TCB is also shown in [111] of figure 1) in order to save the connection parameters. Then, a SYN-ACK is sent back to the client (corresponding to what is shown in [130] of figure 1) and FSM state is moved to the 'SYN RECVD' state [210]. In this state, either the server receives an ACK to his SYN-ACK and move to the 'ESTABLISHED' state [220], or does not receive it in time (request for connection times out) thus, close the connection. This can be done gracefully, by moving FSM to 'FIN-WAIT-1' state [230], or just by de-allocating the corresponding resources that were reserved when SYN was first received. Therefore, as already discussed, keeping track of the initial flow at the server, through an instantiation of a FSM, is the origin of the DoS referred to as SYN flood attack. Indeed, creating a TCB, instantiating and saving a FSM and sometime creating a thread, uselessly consumes significant server resources for the time half-open connection are active i.e., before they time out. As a consequence, it is easy to hackers to keep sending fake SYN packets that may consume all, or a significant part of the server resources, that are no longer available to the valid users.

**Figure 2-b** then highlights the modification brought by the invention to TCP FSM in order to overcome DoS resulting from a SYN flooding. Instead of moving from the 'LISTEN' state [200] to the 'SYN RECVD' state [210], upon receiving a SYN request, the invention assumes that FSM rather returns [240] to the 'LISTEN' state where it does not consume any resources however, sending immediately a computed SYN-ACK [241] towards the alleged client i.e., at the IP return address contained into the SYN request. Thus, up to this point, process is memory-less (no control block or thread are created) hence, SYN-ACK must be granted some form of uniqueness so that when a a real client responds with a ACK [251], in order to normally end the 3-way handshaking necessary to establish a TCP connection, server can validate this received ACK as valid i.e., corresponds to a true previous sent SYN-ACK even though no record of the SYN requests and of the SYN-ACK responses is ever done. Thus, the whole idea of the invention is to forget everything about connection requests until a ACK is received, that server is able to recognize as valid, in which case the modified FSM moves directly [250] from the 'LISTEN' state to the 'ESTABLISHED' state where resources are indeed allocated in particular, a control block is created [252]. Because only valid customers are responding, the problem of SYN flooding is thus solved since all fake SYN requests are just ignored through this mechanism.

The following figures depicts a preferred embodiment of the invention. Those skilled in the art will recognize that numerous modifications may be brought to this particular description without departing from the spirit of the invention here above outlined.

**Figure 3** shows the TCP header [300] which includes a 32-bit 'sequence number' field [310] and a 32-bit 'acknowledgment number' field [320] used during the 3-way handshaking to synchronize the connection. Especially, the initial sequence number or ISR discussed in figure 1 is inserted by the server in field [310], or by whichever piece of communications equipment target of the initial SYN request, in the SYN-ACK response from this server to the originator of this SYN request i.e., the client per the terminology used in figure 1. It is worth noting here that a SYN request is recognized because TCP header bit 'SYN' [330] is set. Header of a SYN-ACK has both bits 'SYN' and 'ACK' [340] set while a ACK header has only 'ACK' bit set. In the third exchange of the three-way handshaking i.e., the ACK from client to server, to finish establishing a valid TCP connection, ISR is returned to the server in the acknowledgment field [320]. More exactly, ISR incremented by one i.e., ISR+1 is returned by client to server so as the former acknowledges the sequence number chosen by the server. Hence, ISR becomes a very valuable piece of information for defeating SYN attacks since it contains a quasi-unaltered (if one except ISR incrementation) put by the server that client is bound to return in field [320] to complete the three-way handshaking.

**Figure 4** shows the overall steps of the method of the invention in a server to defeat SYN attacks. Again, the terminology in use in the description of the invention is, for the sake of clarity, referring to a server side and a client side as shown in figure 1. However, it must be understood that a server is any piece of hardware and software in any combination of, susceptible to DoS or DDoS attacks based on the creation of half-open connections while a client is any valid or malicious user capable of sending SYN requests.

**Figure 4-a** shows the steps of the method, when TCP is open [400], and dealing with the reception of SYN requests in the server. It is worth noting here that the method does not make any assumption upon the source of the SYN request. They are either originated by valid and/or malicious users i.e., the invention does not assume that incoming SYN requests need to be whatsoever, first filtered to prevent SYN flooding. Then, server is listening, looping [412] on step [410] for the occurrence of a SYN request. Upon receiving such a SYN request, containing an ISS (Initial Sequence number Sender side), one proceeds immediately [414] to next step [420] in which a unique ISR (Initial Sequence number Receiver side) is computed. A preferred method for computing ISR is discussed and described at length in following figures. After which, a SYN-ACK is normally sent back to the alleged source of the SYN i.e., to the IP address of the sender or to a spoofed address in case of a SYN attack. SYN-ACK, thus formatted, includes ISS incremented by one (this is what a valid client is normally expecting) plus the here above unique computed ISR. Finally, SYN receiving part of the method per the invention goes back [432] to the listening step [410], waiting for another SYN request to be processed. Hence, this is a memory less process, no recording of the SYN and SYN-ACK is performed, so that no resources are ever consumed, beyond the computation of a unique ISR, while server is receiving SYN requests.

**Figure 4-b** is the counterpart of figure 4-a showing the overall steps of the method of the invention when a ACK is received after TCP is open. Server is listening, looping [413] on step [411] for the occurrence of an ACK. At this point of the description it must be reemphasized that only valid users are sending back to the server acknowledgments since they are the only ones that really desire to complete the pending 3-way handshaking's. Upon receiving such an ACK [415], containing the computed ISR previously mentioned (incremented by 1 as protocol calls for), next step [421] consists in checking ISR so that it is accepted as valid. In other words, the checking is aimed at validating that ISR ACK has indeed previously been computed by the server thus, authenticating the ACK. If not recognized as authentic, ACK is dropped [423] and process resume at step [411]. However, as expected (since all ACK are normally coming from valid users), checking is successful and one proceeds to step [425] where ISR is further decoded so as to retrieve, imbedded in it, the parameters of the connection as first requested in the initial SYN request (of which no memory exists in server) according to what was discussed in previous figures. In particular this step should allow to derive from ISR e.g., a TCP window size and/or a maximum segment size or MSS. Hence, next step [427] consists in finally allocating all the resources that are necessary to handle the TCP connection especially creating a TCB that fits what has been decoded from ISR at step [425]. At completion of it TCB connection is indeed established [427] that is, state [220] of figure 2 is reached directly from the listening state [200] which is eventually returned to [431].

**Figure 5** shows, among numerous possibilities using techniques and methods well-known from the art, a preferred generic method for computing ISR in server. In this approach server uses a randomly generated key [500] to eventually produce a server signature [540]. PRN (pseudo-random-number) generators and One-way Hash functions, discussed here after, are key to cryptography and have received a considerable attention. An abundant literature on these subjects exist. In particular, 'Applied Cryptography' by Bruce Schneier, Wiley editors, 1996, is an outstanding review of techniques and methods used in cryptography thus, including PRN generators and One-way Hash functions necessary to carry out this preferred embodiment of the invention. Whatever system is chosen to produce the randomly generated key [500] it must have all the properties attached to good PRN generators as stated e.g., in the here above referenced book. Especially, because randomly generated key [500] are going to be regularly updated to prevent attacks against the method of the invention, if a key is compromised it should however be impossible i.e., computationally impracticable during the time frame a key is in effect, to derive current used key from a previous compromised key. That is PRN generator must be impredictable. Then key, is concatenated to the client socket [510] and the server socket [520] i.e., the pair of sockets that uniquely defines a TCP connection. In the jargon in use by the TCP/IP suite of protocols a socket is the combination of an IP address with a TCP port number thus, unambiguously identifying one side of a TCP connection. More on this can also be found in RFC#0793, request for comment of the IETF (Internet Engineering Task Force), 'Transmission Control Protocol, DARPA Internet Program, protocol specification'. On this concatenated word [500], [510] and [520] a One-way Hash function [530] is applied so as to obtain a unique digest [540] referred to as Server Signature in the following, that may fit into the 32-bit sequence number field [561] or into the acknowledgment field [562] of the TCP header [560]. Server signature should not occupy the 32 available bits since it should also be possible to remember a few characteristics about the initial SYN request from the client. As an example server signature [540] could be a 24-bit field leaving an octet to permit that initial incoming SYN request be classified in one out of 256 (i.e.: 2⁸) predetermined categories so that when actually established (when ACK is later received in server) the connection parameters indeed fit best the initial request even though nothing was saved about it. To be more specific, the 8-bit Category Index field [550] can be used to trigger the creation of a TCB aimed at handling a connection supporting a window size of e.g., 16 kilo octets, a parameter that was set in a field [563] of the initial SYN request however, not remembered. Other connection parameters can thus be predetermined by server in a connection combination table [570] to offer, in this particular example, when a connection is actually established (when ACK is received in server), a choice among 256 categories. Obviously, any other balancing between the width of the subfields [540] and [550] is possible depending on what category number is best for a particular application of the invention (what number of categories is necessary to cover all connection combinations of the application) and the lowest field width acceptable for the server signature. For this latter aspect the consequences of the choice can be better apprehended by assuming, for a moment, that server signature field would just be a 4-bit field (an obvious far too narrow field) so that there would only be 16 different signatures possible. Then, a hacker could easily conduct an attack against a site implementing the invention, flooding it with fake ACKs covering the whole range (i.e., 16) of signatures. Even though only 1 out of 16 attempts would result in the actual establishment of a connection resulting in the allocation of the corresponding resources, as in SYN flooding attacks, server resources would be soon exhausted. Therefore, signature must be wide enough to prevent this kind of attack. A 24-bit server signature, as suggested in this example, is definitively large enough since the ratio in this case is approximately 1 over 16,000,000. The other type of attack that could theoretically be conducted against a server implementing the invention would assume that a randomly generated key can be retrieved back from the server signature (client socket and server socket are known). This should be unfeasible (i.e., computationally long and difficult) if One-way Hash function is well chosen. The difficulty can be made much higher by changing regularly the randomly generated key so that a hacker would only have a short period of time to guess the key before it is changed.

**Figure 6-a** shows a PRN generator [600] of a kind suitable to implement the invention. It is activated [602] regularly so as the randomly generated key is updated. A current key [604] is stored to compute ISRs while former key [606] is remembered too for the checking part in figure 6-c hereafter. It is here assumed that the longest duration time of a TCP connection segment i.e., MSL (Maximum Segment Lifetime) does not exceed the period at which PRN keys are updated.

**Figure 6-b** depicts the steps of the exemplary method for generating a computed ISR i.e., whenever a SYN request has been received [610] in server so it corresponds to global step [420] in figure 4-a. Then, client socket [612] is formed extracting the information from TCP and IP datagram headers as received from client in the client SYN request. Server socket [614] is formed from server IP address and TCP port number of the application and current key is obtained [616] from PRN generator register [604] where it is stored. The three pieces of information are concatenated [620] then, hashed [630] so as to obtain a server signature [640] which is formatted [650], with a Category Index chosen [618] depending on the kind of SYN received, in order to be eventually inserted as a computed ISR [660] in the corresponding field of the TCP header.

**Figure 6-c** depicts the steps of the exemplary method for checking the acknowledgment field of the TCP header upon receiving an ACK supposedly containing a server computed ISR (incremented by the client per regular TCP protocol). This figure is thus an exemplary detailed description of step [421] in figure 4-b. Checking method is invoked whenever an ACK is received [670]. As in figure 6-b for computing ISR client socket [672] and server socket [674] are got. The first key to use [676] is the current key selected at step [678]. Selected key, client socket, server are then concatenated [680] and hashed [682] so as to re-compute server signature [684]. The ACK acknowledgment field [690] is decremented [692] in order to retrieve ISR as originally computed by server from which server signature is extracted [694] (i.e., bits 0-23 in this example) and compared [686] to what has been re-computed [684]. If a match is found signature is accepted as authentic, category index is extracted [688] (i.e., bits 24-31 in this example), so that one can proceed to the establishment of a TCP connection since checking passes.

If however comparison [686] fails a second computation is attempted if a 2nd Loop memory means is not already set [696]. If answer is negative former key is selected [698]. Second loop memory means is set [679] after which a second server signature computation resumes at step [676] with former key (so as to check the case where key has been updated after SYN-ACK was sent).

Finally, if comparison fails again at step [686] answer to test [696] is positive and checking fails.

**Figure 7** discusses the placement of the invention which, for example, can be part of a stand alone server [700] or box running the TCP/IP suite of protocols, or part of, managing a TCP connection table [710] and, allocating resources as described previously. The invention can be implemented as well in a front-end function, here after denominated a 'shield' [720], that could part of a broader load balancing function, a popular solution to implement larger Web sites under the form of a cluster of servers [730]. In which case only the genuine requests are passed from the shield to the individual servers of the cluster e.g., through a hand-off mechanism [740], a technique known from the art to hand off to a different player a TCP connection that was started in a first device.

## Claims

1. A method for defeating, in a server unit [110] of an IP (Internet Protocol) network [105], a SYN flooding attack, said server unit running TCP (Transport Control Protocol) to allow the establishment of one or more TCP connections [102] with one or more client units [100], said method comprising the steps of:
upon having activated TCP [400] in said server unit:
listening [410, 412] for the receiving of a SYN message sent [120] from one said client unit [100];
upon receiving [414] a said SYN message:
computing [420] an ISR (Initial Sequence number Receiver side) [131];
responding [430] to said client unit [100] with a SYN-ACK message [130] including computed said ISR;
resuming [432] to said listening step.

2. The method according to claim 1 wherein the step of computing said ISR further includes the steps of:
concatenating a randomly generated key [500] with an identification of one said TCP connection said identification including:
a client socket [510] and a server socket [520];
hashing [530] said concatenation thus, obtaining a server signature [540];
concatenating said server signature and a category index [550] referring to a set of predefined TCP connection categories [570];
thereby, obtaining a computed ISR [555].

3. The method according to any one of the previous claims wherein said computing step further comprises the steps of:
keep updating [602], in said server unit [110], a pseudorandom number (PRN) generator [600];
holding a current key [604];
remembering a former key [606];
using said current key [616] as said randomly generated key [500] for said computed ISR.

4. The method according to any one of the previous claims wherein the step of concatenating said category index includes the further step of:
picking up a category index [618] within said set of predefined TCP connection categories [570] on the basis of the content of received said SYN message [610].

5. The method according to any one of the previous claims wherein said updating step includes the step of:
keep updating said PRN generator [600] at a rate not higher than the MSL (Maximum Segment Lifetime) defined in said TCP connection.

6. A method for defeating, in said client unit [100] of an IP network [105], a SYN flooding attack, said method comprising the steps of:
upon receiving [132] said SYN-ACK message from said server
unit [110]:
normally responding with an ACK message [140], said step of responding comprising the step of:
including, in said ACK message [140], said computed ISR [420, 555] incremented by one;
thereby, complying with the regular TCP rules.

7. A method for defeating, in said server unit [110] of said IP network [105], said SYN flooding attack, said method comprising the steps of:
upon having activated TCP in said server unit:
listening [411, 413] for the receiving of a said ACK message sent [140] from one said client unit [100];
upon receiving [415] a said ACK message:
checking [421] said ISR;
if failing said checking step:
dropping [423] said ACK message;
if passing said checking step:
decoding [425] said ISR as being an authentic said computed ISR;
allocating resources [427] for a said TCP connection according to content of said computed ISR;
establishing [429] a said TCP connection;
in either case:
resuming [431] to said listening step [411].

8. The method of claim 7 wherein the decoding step includes the step of:
interpreting said category index [550] extracted [688] from said computed ISR [555].

9. The method according to any of claim 7 or claim 8 wherein the allocating step includes the step of:
selecting a predefined set of parameters, for said TCP connection, on the basis of the value of said category index [550].

10. The method according to claim 7 wherein the step of checking said ISR includes, upon receiving said ACK message [670], the steps of:
having, firstly, selected said current key [678]:
getting said selected key [676];
concatenating said selected key with an identification of said TCP connection, said identification including:
a client socket [672] and a server socket [674];
hashing [682] said concatenation thus, obtaining a re-computed server signature [684];
extracting [690] acknowledgment field [562] from said ACK message;
decrementing [692] content of said acknowledgment field;
extracting said server signature [694];
comparing [686] said re-computed server signature [684] and extracted said server signature [694];
if matching:
extracting [688] said category index thus, passing checking;
if failing:
checking if a second loop status [696] is set;
if not set:
selecting said former key [698];
setting said second loop status [679];
resuming at above getting step [676];
if set:
failing checking step.

11. A system, in particular a system implementing a shield [720] for defeating TCP SYN flooding attacks, comprising means adapted for carrying out the method according to any one of the previous claims.

12. The system of claim 11 wherein said shield is placed in front of a cluster of servers [730], said shield comprising:
means to hand off [740] a just established [429] TCP connection from said shield [730] to a dedicated server within said cluster of servers (730].

13. A computer-like readable medium comprising instructions for carrying out the method according to any one of the claims 1 to 10.
